(19) Europäisches Patentamt
European Patent Office
Office européen des brevets

(11) **EP 2 409 816 B2**

(12) ## NEUE EUROPÄISCHE PATENTSCHRIFT
Nach dem Einspruchsverfahren

(45) Veröffentlichungstag und Bekanntmachung des Hinweises auf die Entscheidung über den Einspruch:
**18.08.2021 Patentblatt 2021/33**

(45) Hinweis auf die Patenterteilung:
**06.06.2018 Patentblatt 2018/23**

(21) Anmeldenummer: **11005535.7**

(22) Anmeldetag: **06.07.2011**

(51) Int Cl.:
**B25J 9/16** (2006.01)

(54) **Manipulatorsteuerung**

Manipulator control

Commande de manipulateur

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.07.2010 DE 102010027572**

(43) Veröffentlichungstag der Anmeldung:
**25.01.2012 Patentblatt 2012/04**

(73) Patentinhaber: **KUKA Deutschland GmbH 86165 Augsburg (DE)**

(72) Erfinder: **Hollmann, Stefan 86157 Augsburg (DE)**

(74) Vertreter: **Schlotter, Alexander Carolus Paul et al Wallinger Ricker Schlotter Tostmann Patent- und Rechtsanwälte Partnerschaft mbB Zweibrückenstrasse 5-7 80331 München (DE)**

(56) Entgegenhaltungen:
WO-A1-2006/091494    DE-A1-102006 046 759
US-A1- 2001 005 120    US-A1- 2010 137 882

- YOUNG S. PARK ET AL: "Semi-autonomous Telerobotic Manipulation: A Viable Approach for Space Structure Deployment and Maintenance", AIP CONFERENCE PROCEEDINGS, Bd. 746, 6. Februar 2005 (2005-02-06), Seiten 1129-1136, XP055119930, ISSN: 0094-243X, DOI: 10.1063/1.1867239

- BETTINI A ET AL: "Vision-Assisted Control for Manipulation Using Virtual Fixtures", IEEE TRANSACTIONS ON ROBOTICS, IEEE SERVICE CENTER, PISCATAWAY, NJ, US, Bd. 20, Nr. 6, 31. Dezember 2004 (2004-12-31), Seiten 953-966, XP011122588, ISSN: 1552-3098, DOI: 10.1109/TRO.2004.829483

- Raúl Armando Castillo Cruces: "Concept and Design of a Cooperative Robotic Assistant Surgery System", , 28. Juli 2008 (2008-07-28), XP055119945, Gefunden im Internet: URL:http://dfpcorec-p.internal.epo.org/wf/ storage/14629DB5A41000A1384/originalPdf [gefunden am 2014-05-23]

- OTMANE S ET AL: "Active virtual guides as an apparatus for augmented reality based telemanipulation system on the Internet", SIMULATION SYMPOSIUM, 2000. (SS 2000). PROCEEDINGS. 33RD ANNUAL WASHINGTON, DC, USA 16-20 APRIL 2000, LOS ALAMITOS, CA, USA,IEEE COMPUT. SOC, US, 16. April 2000 (2000-04-16), Seiten 185-191, XP010500527, DOI: 10.1109/SIMSYM.2000.844915 ISBN: 978-0-7695-0598-5

- PANADDA MARAYONG et al.: "Spatial Motion Constraints: Theory and Demonstrations for Robot Guidance Using Virtual Fixtures", Proceedings of the 2003 IEEE International Conference on Robotics & Automation, 14 September 2003 (2003-09-14), Retrieved from the Internet: URL:http://www.math.unm.edu/~vageli/papers /FLEX/icra03-marayong.pdf

EP 2 409 816 B2

- Jake J. Abbott, Panadda Marayong, Allison M. Okamura: "Haptic Virtual Fixtures for Robot-Assisted Manipulation" In: "Robotics Research", 1 January 2007 (2007-01-01), Springer Berlin Heidelberg, Berlin, Heidelberg ISBN: 978-3-540-48110-2 pages 49-64, DOI: 10.1007/978-3-540-48113-3_5,

**Beschreibung**

Die vorliegende Erfindung betrifft ein Verfahren und eine Vorrichtung zum Steuern eines Manipulators, insbesondere eines Roboters. Dabei wird vorliegend zur kompakteren Darstellung auch eine Regelung verallgemeinernd als Steuerung bezeichnet.

Manipulatoren, insbesondere Roboter wie beispielsweise Industrieroboter, werden heute in der Regel dadurch gesteuert, dass Manipulatorposen vom Anwender vorgegeben und dann von der Manipulatorsteuerung angefahren werden. Dabei kann eine Manipulatorpose gleichermaßen im Konfigurationsraum, der durch die die Freiheitsgrade des Manipulators, etwa seine Gelenkwinkel, aufgespannt wird, oder durch Lage und/oder Orientierung eines Referenzsystems wie beispielsweise des TCPs ("Tool Center Point") im kartesischen Arbeitsraum vorgegeben werden. Der Anwender kann Posen beispielsweise, etwa mittels eines Programmierhandgerätes, anfahren und abspeichern. Gleichermaßen können diese beispielsweise mittels einer Bahnplanung, Interpolation und/oder Optimierung, berechnet werden, vorzugsweise wenigstens teilweise automatisiert. Die vorgegebenen Manipulatorposen kann die Manipulatorsteuerung dann beispielsweise interpolierend, überschleifend und/oder mit vorgegebenen Bahngeometrien, etwa Geraden oder Kreissegmentbahnen im Arbeits- oder Konfigurationsraum, anfahren, um eine Manipulatoraufgabe zu erfüllen, beispielsweise ein Werkstück in einer vorgegebenen Endlage und/oder -orientierung zu fügen.

Nachteilig erfordert eine solche Vorgabe erhebliches Expertenwissen und ist, insbesondere bei mehreren Freiheitsgraden und weiteren Randbedingungen, insbesondere störende Gegenstände in der Umgebung des Manipulators, sehr komplex.

Insbesondere, um solche Hindernisse bei der interpolierenden Vorgabe von Manipulatorposen zu berücksichtigen, schlägt die WO 2007/093413 A1 vor, reale Gegenstände in der Umgebung des Manipulators durch einen Sensor zu erkennen und als Störkontur in einer Landkarte abzubilden. Wird in der Landkarte nun offline eine Bahn geplant, die die Störkonturen nicht kreuzt, kann eine Kollision des Manipulators mit den durch die Störkonturen abgebildeten, statischen Gegenständen verhindert werden.

Dies nutzt das Potential des Kollisionsverfahrens jedoch insbesondere in Hinblick auf die Vorgabe von Manipulatoraufgaben noch nicht optimal aus.

Aus der US 2001/005120 A1 ist ein Verfahren zum Steuern eines handgeführten angetriebenen Manipulators bekannt. In verschiedenen Arbeitsräumen werden virtuelle Grenzen vorgegeben, um zu verhindern, dass ein Anwender den Manipulator an eine Grenze des jeweiligen Arbeitsraumes führt. Die WO 2006/091494 A1 und US 2010/137882 A1 offenbaren weitere Lösungen für Manipulatorsteuerungen mit Anwendung in der computerassistierten Chirurgie, bei denen ein manuelles Steuern des Manipulators durch den Anwender mittels virtueller Störkonturen automatisch begrenzt wird.

Aufgabe der vorliegenden Erfindung ist es daher, eine Steuerung eines Manipulators zu verbessern.

Diese Aufgabe wird durch ein Verfahren mit den Merkmalen des Anspruchs 1 gelöst. Anspruch 11 stellt eine Steuerung, Anspruch 12 ein Computerprogrammprodukt zur Durchführung eines erfindungsgemäßen Verfahrens unter Schutz. Die Unteransprüche betreffen vorteilhafte Weiterbildungen.

Die vorliegende Erfindung geht von der Grundidee aus, zusätzlich oder alternativ zu Störkonturen, die reale Gegenstände in der Umgebung eines Manipulators abbilden, eine virtuelle Störkontur so vorzugeben, dass der Manipulator automatisch eine Manipulatoraufgabe erfüllt, wenn er dieser virtuellen Störkontur folgt.

Dies lässt sich zum besseren Verständnis am Bild eines virtuellen Trichters illustrieren, dessen Spitze beispielsweise mit einer anzufahrenden TCP-Position zusammenfällt. Folgt nun der Manipulator, vorteilhafterweise mittels eines ohnehin bereits vorhandenen Kollisionsverfahrens, dem die virtuelle Störkontur vorgegeben wird, diesem virtuellen Trichter, wird sein TCP automatisch in die gewünschte Endposition geführt. Auf diese Weise kann der Anwender auch komplexe Manipulatoraufgaben in einfacher, intuitiver Weise vorgeben.

Nach einem erfindungsgemäßen Verfahren zum Steuern eines Manipulators, insbesondere eines Roboters wie zum Beispiel eines Industrieroboters, wird allgemein eine virtuelle Störkontur auf Basis einer Manipulatoraufgabe vorgegeben.

Die Manipulatoraufgabe kann insbesondere das Anfahren einer Pose umfassen. Dabei kann die Pose direkt, beispielsweise durch Vorgabe von Antriebs- oder Gelenkkoordinaten, oder indirekt, zum Beispiel durch die Vorgabe einer Position, i.e. Lage und/oder Orientierung eines Referenzsystems wie insbesondere des TCPs, vorgegeben werden. Beispielsweise kann eine anzufahrende Pose durch die kartesischen Lagekoordinaten und/oder Euler- oder Kardanwinkel des TCPs in einer Fügestellung vorgegeben werden. Gleichermaßen kann eine Manipulatoraufgabe auch eine Bewegung längs einer vorgegebenen Bahn oder innerhalb vorgegebener Grenzen umfassen.

Die virtuelle Störkontur kann in einer bevorzugten Ausführung ganz oder wenigstens teilweise automatisiert vorgegeben werden. Beispielsweise kann der Anwender in einer, vorzugsweise graphischen, Umgebungsdarstellung, etwa einem Bild der Manipulatorumgebung, eine Ziellage für den TCP auswählen. Dann wird beispielsweise der vorstehend erläuterte Fügetrichter automatisiert so vorgegeben, dass seine Spitze mit der ausgewählten Ziellage übereinstimmt und die aktuelle TCP-Lage auf der Mittellinie des Trichters liegt.

Zusätzlich oder alternativ kann die virtuelle Störkontur dynamisch vorgegeben werden, i.e. zeitlich veränderbar. Bevorzugt kann die virtuelle Störkontur während des Betriebs des Manipulators verändert, beispielsweise gedreht, verschoben und/oder deformiert werden.

In einer bevorzugten Ausführung wird die virtuelle Störkontur wenigstens teilweise automatisiert und/oder dynamisch auf Basis eines Sensorsignals vorgegeben. Beispielsweise kann durch einen Sensor eine anzufahrende Position, etwa einer Fügestelle, erfasst werden, die dann als anzufahrende Manipulatorpose vorgegeben wird. Ändert sich die Position der Fügestelle, kann dies über einen Sensor, beispielsweise eine Lasertracker, einen Ultraschall- oder Infrarotsensor, eine Bilderkennung und -auswertung oder dergleichen erfasst und so eine zeitlich veränderliche Manipulatorpose dynamisch vorgegeben werden, zu der dann, beispielsweise wie vorstehend erläutert, automatisiert jeweils ein Fügetrichter als virtuelle Störkontur vorgegeben wird.

Die virtuelle Störkontur kann in einem Arbeits- oder einem Konfigurationsraum des Manipulators vorgegeben werden, die im Allgemeinen durch Vorwärts- bzw. Rückwärtstransformation ineinander überführbar sind. Der Arbeitsraum weist vorzugsweise wenigstens zwei, insbesondere drei Lagedimensionen und/oder wenigstens eine, insbesondere drei Orientierungsdimensionen auf, in ihm kann beispielsweise die Position eines Referenzsystems wie des TCPs vorgegeben werden. Der Konfigurationsraum wird von den Freiheitsgraden des Manipulators aufgespannt und weist somit vorzugsweise sechs Dimensionen, gegeben beispielsweise durch Antriebs- oder Gelenkstellungen, auf.

In einer bevorzugten Ausführung kann die Störkontur auch in einem Unterraum des Arbeits- oder Konfigurationsraums des Manipulators vorgegeben werden. Ein solcher Unterraum kann eine niedrigere Dimension aufweisen. So kann beispielsweise die Störkontur in einem dreidimensionalen Unterraum des Arbeitsraumes vorgegeben werden, der durch drei Lagekoordinaten aufgespannt wird, wenn etwa die Orientierung des Referenzsystems nicht vorgegeben werden soll. Gleichermaßen kann die Störkontur zum Beispiel in einem dreidimensionalen Unterraum des Konfigurationsraumes vorgegeben werden, der durch die Gelenkstellungen einer Roboterhand aufgespannt wird, wenn die Stellung von Grundgestell und Schwinge eines sechsachsigen Knickarmroboters nicht berücksichtigt wird.

Zusätzlich oder alternativ kann der Unterraum auch Ränder oder Lücken gegenüber dem vollständigen Arbeits- oder Konfigurationsraum aufweisen. Solche Ränder bzw. Lücken können insbesondere reale Hindernisse abbilden, wie dies zum Beispiel in der einleitend genannten WO 2007/093413 A1 erläutert ist. Indem die virtuelle Störkontur, die gerade keine realen Hindernisse abbildet, in einem Unterraum vorgegeben wird, der solche realen Hindernisse bereits als Ränder bzw. Lücken ausspart, kann sichergestellt werden, dass der Manipulator die Manipulatoraufgabe kollisionsfrei erfüllt.

Die Störkontur wird als Hyperfläche vorgegeben, die beispielsweise in der Form

$$\mathbb{R}^m \ni \Psi(k_1, \ldots k_n) = 0; \; m \geq 1$$

mit der m-wertigen Relation bzw. Funktion $\Psi$ und den Raumkoordinaten $k_1, \ldots k_n$ definiert sein kann, die zum Beispiel kartesische Koordinaten und/oder Euler- oder Kardanwinkel oder Freiheitsgrade des Manipulators sind. In einer bevorzugten Ausführung ist die Hyperfläche konkav, wobei in einer wiederum bevorzugten Weiterbildung eine aktuelle bzw. Ausgangsmanipulatorpose in einem durch die konkave Hyperfläche definierten Innenraum angeordnet ist.

Vorzugsweise weist die Hyperfläche eine einzige Singularität auf, in der eine Tangente an die Hyperfläche nicht eindeutig definiert ist. Ein tangentiales Abfahren der Hyperfläche endet somit in einer solchen Singularität. Bildet diese in einer bevorzugten Ausführung eine anzufahrenden Pose des Manipulators ab, so fährt dieser automatisch in diese Pose und verharrt dort. Insbesondere kann eine Spitze eines Kegels eine solche Singularität bilden, die Kegelmantelfläche entsprechend die Hyperfläche.

Allgemein kann die Störkontur einen oder mehrere geometrische Elementarkörper, insbesondere Kegel, aufweisen, da diese mathematisch einfach handhabbar und teilweise anschaulich darstellbar und somit intuitiv vorgebbar sind. Dabei kann ein Kegel verallgemeinernd auch als Hyperfläche im mehr-, insbesondere sechsdimensionalen Raum definiert sein. Gleichermaßen kann er zu einem zweidimensionalen Kegelschnitt entarten. Ein Zylinder wird vorliegend zur kompakteren Darstellung ebenfalls als Kegel mit einem Öffnungswinkel gleich Null betrachtet.

Erfindungsgemäß wird der Manipulator automatisch in Relation zu der vorgegebenen virtuellen Störkontur gesteuert.

Eine automatische Steuerung umfasst insbesondere eine automatische Bewegungskommandierung des Manipulators. Gleichermaßen kann der Manipulator auch dadurch automatisch im Sinne der vorliegenden Erfindung gesteuert werden, dass automatisch Bewegungsbegrenzungen eingehalten werden, die ein manuelles Steuern des Manipulators durch den Anwender begrenzen. So kann beispielsweise der Manipulator automatisch entlang des Fügetrichters in dessen Spitze verfahren werden, sobald ein Referenzpunkt in dem Raum, in dem die virtuelle Störkontur vorgegeben ist, auf den Fügetrichter trifft. Gleichermaßen kann ein Anwender den Manipulator manuell kommandieren, wobei lediglich Manipulatorbewegungen außerhalb der virtuellen Störkontur verhindert, i.e. entsprechende Kommandos nicht ausgeführt oder in Bewegungen tangential zur virtuellen Störkontur transformiert werden. Steuert der Anwender den Manipulator dann beispielsweise über ein Programmierhandgerät, nachdem er einen virtuellen Fügetrichter vorgegeben hat, kann er den TCP innerhalb des Fügetrichters frei bewegen, wobei der TCP jedoch bei Kontakt mit der Innenfläche des Fügetrichters an dieser entlang gleitet.

Die Relation kann beispielsweise durch einen minimalen Abstand zwischen einem Punkt, der die Manipulatorpose in den Raum abbildet, in dem die virtuelle Störkontur vorgegeben ist, und der virtuellen Störkontur definiert sein. Insbesondere kann dieser Abstand zu Null vorgegeben sein, so dass der Manipulator automatisch an der Störkontur entlang bzw. tangential zu dieser gesteuert wird.

In einer bevorzugten Ausführung wird der Manipulator gerichtet entlang der Störkontur gesteuert. Hierunter wird insbesondere verstanden, dass für, vorzugsweise alle, Punkte der Störkontur jeweils genau eine Bewegungsrichtung tangential zur Störkontur vorgegeben ist. Beispielsweise kann für eine Gerade, die allgemein Bewegungen in zwei entgegengesetzte Richtungen zulässt, generell eine Richtung zu einem bestimmten Geradenpunkt hin als Bewegungsrichtung vorgegeben sein. Bei einem Fügetrichter kann beispielsweise die Richtung auf der inneren Mantelfläche zur Trichterspitze hin vorgegeben sein. Gleichermaßen kann die Richtung der gerichteten Steuerung entlang der Störkontur auch variabel, beispielsweise durch die Tangentialkomponente der Geschwindigkeit vorgegeben sein, mit der ein Referenzpunkt auf die virtuelle Störkontur trifft.

Eine gerichtete Steuerung bzw. Bewegung kann auf verschiedene Arten implementiert sein. Beispielsweise kann die Störkontur streng konkav vorgegeben sein und die Bewegung stets in Richtung zu- oder abnehmender Krümmung erfolgen. Gleichermaßen kann eine gerichtete Bewegung stets so erfolgen, dass wenigstens eine Koordinate zu- oder abnimmt. So kann beispielsweise entlang einer Geraden im zweidimensionalen Raum dadurch gerichtet gesteuert werden, dass eine der beiden Koordinaten monoton zunimmt.

In einer bevorzugten Ausführung wird der Manipulator mittels eines Kollisionsverfahrens an der Störkontur entlang gesteuert. Unter einem Kollisionsverfahren wird dabei insbesondere ein Verfahren verstanden, welches eine Kollision eines Manipulators mit einer Störkontur, die ein reales Hindernis abbildet, erkennt und handhabt, beispielsweise den Manipulator entlang der Störkontur weitersteuert. Wie vorstehend erläutert, geht die vorliegende Erfindung auf die Grundidee zurück, zusätzlich oder alternativ zu Störkonturen, die reale Hindernisse abbilden, eine virtuelle Störkontur auf Basis einer Manipulatoraufgabe so vorzugeben, dass der Manipulator beim automatischen Steuern in Relation zu, insbesondere entlang dieser virtuellen Störkontur automatisch die Manipulatoraufgabe erfüllt. Durch diesen Ansatz, die Störkontur nicht bzw. nicht ausschließlich defensiv zur Vermeidung realer Hindernisse, sondern umgekehrt aktiv zur Erfüllung einer Manipulatoraufgabe zu nutzen, können so bereits vorhandene und optimierte Kollisionsverfahren genutzt werden. In einer bevorzugten Ausführung ist hierzu eine Schnittstelle vorgesehen, die eine auf Basis einer Manipulatoraufgabe vorgegebene virtuelle Störkontur als, gegebenenfalls zusätzliche, Störkontur einem Kollisionsverfahren übergibt.

Erfindungsgemäß wird die virtuelle Störkontur automatisiert angefahren. Da nach dem Anfahren der Störkontur der Manipulator automatisch in Relation zu dieser gesteuert wird und damit die Manipulatoraufgabe erfüllt, kann durch ein automatisiertes Anfahren der virtuellen Störkontur diese Zwangsführung initialisiert werden. Erfindungsgemäß wird auf Basis einer Ausgangspose des Manipulators automatisch ein Ausgangsbereich in Form einer Hyperfläche vorgegeben, der die Ausgangspose, vorzugsweise gerichtet, mit der Hyperfläche verbindet. Zum Beispiel kann ein Trichterboden eines Fügetrichters durch die aktuelle Manipulatorpose gelegt werden. Eine geradlinige Bewegung des Manipulators, beispielsweise seines TCPs im Arbeits- oder Konfigurationsraum, entlang dieses Trichterbodens führt ihn zwangsläufig auf die innere Mantelfläche des Trichters und damit auf die virtuelle Störkontur, auf der er dann automatisch zur Trichterspitze gesteuert wird.

Ein erfindungsgemäßes Störkonturvorgabemittel zum Vorgeben einer virtuellen Störkontur auf Basis einer Manipulatoraufgabe kann, wie vorstehend erläutert, insbesondere ein graphisches Ausgabemittel, etwa einen Bildschirm, zur Darstellung eines Bildes des Arbeits- oder Konfigurations(unter)raums sowie ein Eingabemittel, zum Beispiel eine Maus, eine Tastatur und/oder einen Touchscreen aufweisen, um die virtuelle Störkontur, beispielsweise durch Auswählen einer Zielpose und automatisierte Generierung eines virtuellen Fügetrichters mit dieser Zielpose als Spitze, vorzugeben. Zusätzlich oder alternativ kann ein Störkonturvorgabemittel ein entsprechendes Programm oder Programmmodul umfassen.

Ein erfindungsgemäßes Bewegungsmittel zum automatischen Steuern des Manipulators in Relation zu einer durch das Störkonturvorgabemittel vorgegebenen virtuellen Störkontur, welches hard- und/oder softwaretechnisch zur Durchführung eines erfindungsgemäßen Verfahrens eingerichtet ist, kann insbesondere durch ein Programm oder ein Programmmodul, und/oder eine Recheneinheit, insbesondere einen Mikrocontroller oder ein entsprechend programmierte Manipulatorsteuerung implementiert sein.

Weitere Vorteile und Merkmale ergeben sich aus den Unteransprüchen und den Ausführungsbeispielen. Hierzu zeigt, teilweise schematisiert:

Fig. 1: einen Manipulator mit einer nach einer Ausführung der vorliegenden Erfindung vorgegebenen virtuellen Störkontur; und

Fig. 2:     den Ablauf eines Verfahrens nach einer Ausführung der vorliegenden Erfindung.

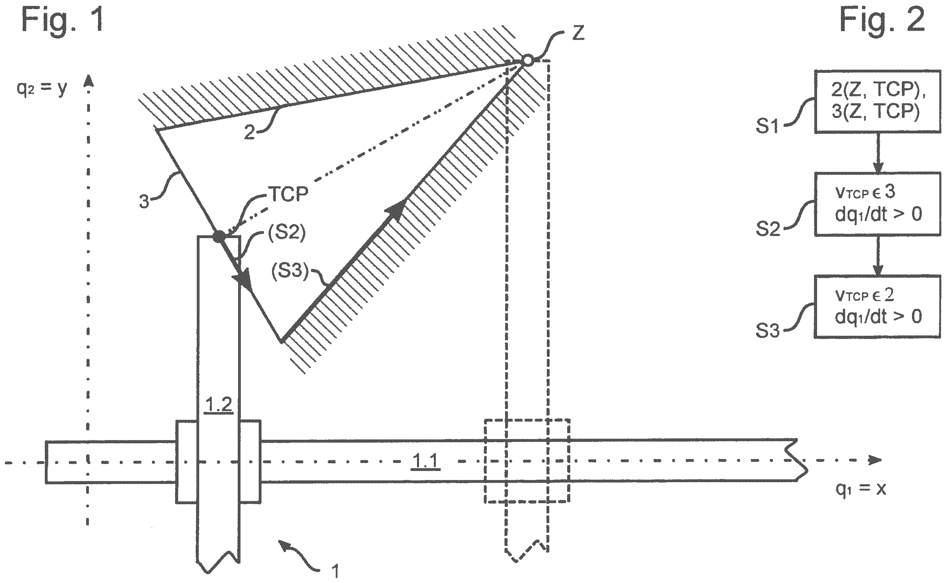

Fig. 1 zeigt zu Erläuterungszwecken einen zweiachsigen Portalroboter 1 mit einer Schiene 1.1 in x-Richtung eines strichpunktiert eingezeichneten Weltkoordinatensystems, auf der ein Schlitten 1.2 verfahrbar ist, der seinerseits in der hierzu senkrechten y-Richtung des Weltkoordinatensystems verfahrbar ist und an dessen in Fig.1 oberer Stirnseite der TCP dieses Roboters 1 definiert ist. Der durch die zweidimensionale kartesische Position (x, y) des TCPs definierte Arbeitsraum $\{ 0 \leq x \leq x_E; y_A \leq y \leq y_E \}$ und der durch die Gelenkstellungen bzw. Freiheitsgrade $(q_1, q_2)$ des zweiachsigen Portalroboters 1 aufgespannte Konfigurationsraum $\{ 0 \leq q_1 \leq q_{1,E}; q_{2,A} \leq q \leq q_{2,E} \}$ stimmen bei diesem Ausführungsbeispiel überein, das daher zur kompakteren Darstellung gewählt wurde. Gleichwohl können die nachfolgenden Ausführungen auch auf andere, insbesondere höherdimensionale Arbeits- oder Konfigurationsräume übertragen werden.
Die Manipulatoraufgabe besteht vorliegend darin, mit dem TCP die Zielposition Z anzufahren, i.e. den Roboter 1 in die strichliert dargestellte Manipulatorpose zu überführen.
Hierzu wählt der Anwender, beispielsweise mittels Maus oder Berühren eines Touchscreens, zunächst die Zielposition Z in einem Bild des Arbeits- bzw. Konfigurationsraumes, wie es Fig. 1 darstellt. Insbesondere bei vier- oder höherdimensionalen Räumen, wie sie beispielsweise bei sechsachsigen Knickarmrobotern bzw. der Berücksichtigung von Lage und Orientierung als Position auftreten, kann beispielsweise zwischen verschiedenen Ansichten von je ein, zwei oder drei Dimensionen umgeschaltet oder können die nicht dargestellten Koordinaten, etwa Orientierungswinkel, als Zahlenwerte eingegeben werden. Diesbezüglich wird ergänzend auf diverse bekannte Kollisionsverfahren verwiesen, aus denen der Fachmann die Darstellung einer Manipulatorumgebung und darauf basierende Eingabemöglichkeiten zum Beispiel für Zielpositionen kennt.
Gleichermaßen kann die Zielposition Z auch beispielsweise durch einen Lasertracker oder die Bildverarbeitung eines Kamerabildes der Roboterumgebung vorgegeben werden (jeweils nicht dargestellt).
Nun wird in einem Schritt S1 (vgl. Fig. 2) auf Basis dieser Manipulatoraufgabe TCP → Z, den TCP in die Zielposition zu überführen, automatisch eine virtuelle Störkontur in Form eines Kegels vorgegeben, der im dargestellten zweidimensionalen Ausführungsbeispiel zu einem Kegelschnitt 2 entartet. Die Spitze des Kegels wird in die Zielposition Z gelegt, seine Mittelachse verläuft durch die aktuelle bzw. Ausgangsposition des TCPs. Der Öffnungswinkel ist geeignet vorgegeben oder kann vom Anwender vorgegeben werden. Der Kegel(schnitt) 2 stellt somit eine Hyperfläche im zweidimensionalen Arbeits- bzw. Konfigurationsraum dar, deren einzige Singularität, in der die Tangente nicht eindeutig definiert ist, mit der Zielposition Z zusammenfällt. Sie kann in der Form

$$\Psi = [\Psi_1, \Psi_2]$$

$$\Psi_1 = a_{11} \times q_1 + a_{12} \times q_2 + a_{13} = 0$$

$$\Psi_2 = a_{21} \times q_1 + a_{22} \times q_2 + a_{23} = 0; a_{11},\dots a_{23} \in \mathbb{R}$$

definiert sein.
Zusätzlich wird auf Basis der Manipulatoraufgabe automatisch ein Ausgangsbereich 3 vorgegeben, im Ausführungsbeispiel in Form einer Kreisfläche, die beim zweidimensionalen Fall zu einer Geraden 3 entartet.
Als nächstes (S2 in Fig. 2) wird der TCP gerichtet entlang der Geraden 3 verfahren. Die Richtung kann beispielsweise durch die Forderung $dq_1/dt > 0$ vorgegeben werden, die im Ausführungsbeispiel eine Bewegung nach rechts in Fig. 1, i.e. zur Zielposition Z hin erzwingt. Gleichermaßen könnte der Ausgangsbereich streng konkav ausgebildet sein und der TCP so gesteuert werden, dass er sich in Richtung zunehmender Krümmung bewegt. Er könnte auch beispielsweise mit konstanter Geschwindigkeit parallel zur x-Achse gesteuert werden.
Während dieser Bewegung überwacht ein Kollisionsverfahren online auf eine Kollision des TCPs mit der virtuellen Störkontur 2. Bei Kollision, i.e. sobald sich der TCP auf der Störkontur 2 befindet, steuert das Kollisionsverfahren den TCP gerichtet entlang der Störkontur. Die Richtung kann wiederum beispielsweise durch die Forderung $dq_1/dt > 0$ vorgegeben werden, die im Ausführungsbeispiel eine Bewegung nach rechts in Fig. 1, i.e. zur Zielposition Z hin erzwingt. Gleichermaßen sind wiederum konkave virtuelle Störkonturen oder ein Entlanggleiten entsprechend einer Tangentialkomponente der Auftreffgeschwindigkeit des TCPs auf die Störkontur denkbar, wobei in letzterem Fall sichergestellt werden muss, dass der TCP die Störkontur 2 unter einem entsprechenden Winkel trifft.
Diese automatische Steuerung führt den TCP an der als Fügetrichter wirkenden virtuellen Störkontur 2 in die Zielposition Z, wo er verharrt, da keine Weiterbewegung entlang der Störkontur 2 mit $dq_1/dt > 0$ möglich ist bzw. er sich in einer Singularität der Hyperfläche 2 befindet.

Man erkennt, dass der Anwender die Manipulatoraufgabe TCP $\rightarrow$ Z sehr einfach und intuitiv vorgeben kann, indem er nur die Zielposition Z vorgibt und die Robotersteuerung den TCP automatisch längs des vorgegebenen Fügetrichters 2 in diese führt, ohne dass die Bahn hierzu konkret vorgegeben werden muss. Insbesondere kann sich die Zielposition Z mit der Zeit ändern, was beispielsweise durch einen entsprechenden Sensor (Lasertracker, Bildverarbeitung etc.) erkannt werden kann. Dann führt die Steuerung den Fügetrichter entsprechend nach, der TCP wird von diesem zuverlässig wieder eingefangen und dann in die neue bzw. jeweils aktuelle Zielposition geführt. Eine Nachführung des Fügetrirhters kann beispielsweise durch entsprechende Verschiebung, Verdrehung und/oder Deformation des Kegels 2 oder auch durch eine Neugenerierungen wie vorstehend beschrieben erfolgen. Wird beispielsweise der Kegel 2 um den an seiner inneren Mantelfläche anliegenden aktuellen TCP in Richtung der neuen Zielposition gedreht und dabei so gestreckt, dass eine Spitze wieder mit der neuen Zielposition übereinstimmt, gleitet der TCP stetig auf dieser dynamisch vorgegebenen Störkontur.

Die automatische Steuerung in Relation zur Störkontur ist nicht auf das vorstehend beschriebene Entlanggleiten beschränkt. Gleichermaßen kann beispielsweise vorgesehen sein, dass der Roboter 1 weiterhin durch den Anwender manuell, beispielsweise mittels eines Programmierhandgerätes (nicht dargestellt) gesteuert wird, wobei die automatische Steuerung dann eine Bewegungsbeschränkung implementiert, die ein Eindringen des TCPs in die virtuelle Störkontur 2 verhindert, Erkennt das Kollisionsverfahren eine Kollision, da der Anwender bei der manuellen Steuerung den TCP auf die virtuelle Störkontur gefahren hat, wird beispielsweise die von Anwender kommandierte Bewegung auf die Störkontur 2 projiziert, so dass der TCP entsprechend der kommandierten Bewegung auf dieser entlang gleitet. Kommandiert der Anwender also beispielsweise eine Bewegung senkrecht auf die Störkontur/tangential zur Störkontur/in einem Winkel $\alpha$ zur Störkontur, so wird der TCP durch das Kollisionsverfahren automatisch auf der Kontaktposition gehalten/entlang der Störkontur verfahren/entlang der Störkontur mit einer Geschwindigkeit $v_2$ verfahren, die der Projektion $v_2 = \cos(\alpha) \times v$ der kommandierten Geschwindigkeit v auf die Störkontur entspricht.

Sind reale Hindernisse im Arbeitsraum des Roboters bekannt, kann dem beispielsweise dadurch Rechnung getragen werden, dass die virtuelle Störkontur in einem Unterraum vorgegeben wird, der dadurch aus dem Arbeits- bzw. Konfigurationsraum hervorgeht, dass die Hindernisse in diesem durch Lücken bzw. Ränder abgebildet werden, wobei die virtuelle Störkontur dann nur in dem Unterraum, i.e. nicht in den Lücken bzw. außerhalb der Ränder vorgegeben werden kann. Auf diese Weise wird zugleich eine Kollision mit diesen Hindernissen auf einfache Weise verhindert.

Bezugszeichenliste

1        (zweiachsiger Portal)Roboter
1.1      Schiene
1.2      Schlitten
2        Kegel(schnitt) (virtuelle Störkontur)
3        Gerade (Ausgangsbereich)
TCP      Tool Center Point
Z        Zielposition
$q_1, q_2$    Gelenkkoordinaten des Roboters
x, y     kartesische Lagekoordinaten des Roboters

Patentansprüche

**1.** Verfahren zum Steuern eines Manipulators, insbesondere eines Roboters (1), mit den Schritten:

(S1): Vorgeben einer virtuellen Störkontur (2) als Hyperfläche auf Basis einer Manipulatoraufgabe, insbesondere einer anzufahrenden Pose (TCP $\rightarrow$ Z) oder abzufahrenden Bahn, und automatisches Vorgeben eines Ausgangsbereichs (3), der eine Ausgangspose des Manipulators mit dieser Hyperfläche verbindet, wobei der Ausgangsbereich (3) in Form einer Hyperfläche vorgegeben wird;
(S2): automatisiertes Anfahren der Störkontur entlang dieses Ausgangsbereichs; und
(S3): automatisches Steuern des Manipulators in Relation zu der virtuellen Störkontur.

**2.** Verfahren nach Anspruch 1, **dadurch gekennzeichnet, dass** der Manipulator gerichtet ($dq_1/dt > 0$) und/oder an der Störkontur entlang gesteuert wird.

3. Verfahren nach einem der vorhergehenden Ansprüche, **dadurch gekennzeichnet, dass** der Manipulator mittels eines Kollisionsverfahrens an der Störkontur entlang gesteuert wird.

4. Verfahren nach einem der vorhergehenden Ansprüche, **dadurch gekennzeichnet, dass** die Störkontur dynamisch und/oder wenigstens teilweise automatisiert vorgegeben wird.

5. Verfahren nach Anspruch 4, **dadurch gekennzeichnet, dass** die Störkontur auf Basis eines Sensorsignals vorgegeben wird.

6. Verfahren nach Anspruch 5, **dadurch gekennzeichnet, dass** die anzufahrende Position über einen Sensor, insbesondere einen Lasertracker, einen Ultraschall- oder Infrarotsensor, oder eine Bilderkennung und -auswertung erfasst wird.

7. Verfahren nach einem der vorhergehenden Ansprüche, **dadurch gekennzeichnet, dass** die Störkontur im Arbeits- oder Konfigurationsraum $(x, y; q_1, q_2)$ des Manipulators oder einem Unterraum hiervon vorgegeben wird.

8. Verfahren nach einem der vorhergehenden Ansprüche, **dadurch gekennzeichnet, dass** die Störkontur als Hyperfläche $(2: \Psi(q_1, q_2) = 0)$ in einem wenigstens zwei-, insbesondere wenigstens drei-, vorzugsweise wenigstens sechsdimensionalen Raum vorgegeben wird.

9. Verfahren nach einem der vorhergehenden Ansprüche, **dadurch gekennzeichnet, dass** die Störkontur wenigstens einen geometrischen Elementarkörper, insbesondere einen Kegel (2), aufweist.

10. Verfahren nach einem der vorhergehenden Ansprüche, **dadurch gekennzeichnet, dass** eine anzufahrenden Pose (Z) eine, insbesondere die einzige, Singularität der Störkontur bildet.

11. Steuerung zum Steuern eines Manipulators, insbesondere eines Roboters (1), mit einem Störkonturvorgabemittel zum Vorgeben einer virtuellen Störkontur (2) auf Basis einer Manipulatoraufgabe, insbesondere einer anzufahrenden Pose (TCP → Z) oder abzufahrenden Bahn, und einem Bewegungsmittel zum automatischen Steuern des Manipulators in Relation zu einer durch das Störkonturvorgabemittel vorgegebenen virtuellen Störkontur, wobei die Steuerung zur Durchführung eines Verfahrens nach einem der vorhergehenden Ansprüche eingerichtet ist.

12. Computerprogrammprodukt mit auf einem maschinenlesbaren Träger gespeicherten Programmcode, der ein Verfahren nach einem der vorhergehenden Ansprüche 1 bis 10 ausführt, wenn er in einer Steuerung nach Anspruch 11 abläuft.

**Claims**

1. A method of controlling a manipulator, in particular a robot (1), comprising the steps of:

   (S1) : prescribing a virtual interference contour (2) as a hypersurface on the basis of a manipulator task, in particular of a pose to be attained (TCP → Z) or a path to be traversed, and automatically prescribing an area of departure (3), which connects an initial pose of the manipulator with this hypersurface, wherein the area of departure (3) is prescribed in the form of a hypersurface;
   (S2) : approaching the interference contour in an automated manner along this area of departure; and
   (S3) : automatically controlling the manipulator in relation to the virtual interference contour.

2. The method according to claim 1, **characterized in that** the manipulator is directed $(dq_1 /dt >0)$ and/or steered along the interference contour.

3. The method according to any one of the preceding claims, **characterized in that** the manipulator is steered along the interference contour by means of a collision procedure.

4. The method according to any one of the preceding claims, **characterized in that** the interference contour is prescribed dynamically and/or in an at least partially automated manner.

5. The method according to claim 4, **characterized in that** the interference contour is prescribed on the basis of a sensor signal.

6. The method according to claim 5, **characterized in that** the pose to be attained is detected by means of a sensor, in particular a laser tracker, an ultrasound sensor, or an infrared sensor, or image recognition and image evaluation.

7. The method according to any one of the preceding claims, **characterized in that** the interference contour is prescribed in the workspace or the configuration space $(x, y; q_1, q_2)$ of the manipulator or in a sub-space thereof.

8. The method according to any one of the preceding claims, **characterized in that** the interference contour is prescribed as a hypersurface $(2: \Psi(q_1, q_2) = 0)$ in a space of at least two dimensions, in particular in a space of at least three dimensions, preferably in a space of at least six dimensions.

9. The method according to any one of the preceding claims, **characterized in that** the interference contour comprises at least one geometrical elementary body, in particular a cone (2).

10. The method according to any one of the preceding claims, **characterized in that** a pose (Z) to be attained forms a singularity of the interference contour, in particular the only singularity of the interference contour.

11. A controller for controlling a manipulator, in particular a robot (1), comprising an interference contour prescribing means for prescribing a virtual interference contour (2) on the basis of a manipulator task, in particular a pose to be attained (TCP Z) or a path to be traversed, and a moving means for automatically controlling the manipulator in relation to a virtual interference contour prescribed by means of the interference contour prescribing means, wherein the controller is arranged for carrying out a method according to any one of the preceding claims.

12. A computer program product with program code which is stored on a machine-readable medium and which carries out a method according to any one of the preceding claims 1 to 10 when it is run on a controller according to claim 11.

**Revendications**

1. Procédé de commande d'un manipulateur, en particulier d'un robot (1), avec les étapes de :

(S1) : prescription d'un contour de perturbation virtuel (2) en tant qu'hypersurface sur la base d'une tâche de manipulateur, en particulier d'une pose à atteindre (TCP Z) ou voie à parcourir et prescription automatique d'une zone de départ (3), qui relie une pose initiale du manipulateur à cette hypersurface, dans lequel la zone de départ (3) est prédéfinie sous la forme d'une hypersurface ;
(S2) : approche automatisée du contour de perturbation le long de cette zone de départ ; et
(S3) : commande automatique du manipulateur par rapport au contour de perturbation virtuel.

2. Procédé selon la revendication 1, **caractérisé en ce que** le manipulateur est commandé orienté $(dq_1 / dt > 0)$ et/ou le long du contour de perturbation.

3. Procédé selon l'une quelconque des revendications précédentes, **caractérisé en ce que** le manipulateur est commandé le long du contour de perturbation au moyen d'un procédé de collision.

4. Procédé selon l'une quelconque des revendications précédentes, **caractérisé en ce que** le contour de perturbation est prédéfini dynamiquement et au moins partiellement de manière automatisée.

5. Procédé selon la revendication 4, **caractérisé en ce que** le contour de perturbation est prédéfini sur la base d'un signal de capteur.

6. Procédé selon la revendication 5, **caractérisé en ce que** la position à atteindre est détectée par le biais d'un capteur, en particulier d'un suiveur laser, d'un capteur à ultrasons ou infrarouge, ou d'une reconnaissance et analyse d'image.

7. Procédé selon l'une quelconque des revendications précédentes, **caractérisé en ce que** le contour de perturbation est prédéfini dans l'espace de travail ou de configuration $(x, y ; q_1, q_2)$ du manipulateur ou un sous-espace de celui-ci.

8. Procédé selon l'une quelconque des revendications précédentes, **caractérisé en ce que** le contour de perturbation est prédéfini en tant qu'hypersurface (2: $\Psi(q_1, q_2) = 0$) dans un espace au moins bidimensionnel, en particulier au moins tridimensionnel, de préférence au moins à six dimensions.

9. Procédé selon l'une quelconque des revendications précédentes, **caractérisé en ce que** le contour de perturbation présente au moins un corps élémentaire géométrique, en particulier un cône (2).

10. Procédé selon l'une quelconque des revendications précédentes, **caractérisé en ce qu'**une pose à atteindre (Z) forme une, en particulier l'unique, singularité du contour de perturbation.

11. Commande pour la commande d'un manipulateur, en particulier d'un robot (1), avec un moyen de prescription de contour de perturbation pour la prescription d'un contour de perturbation virtuel (2) sur la base d'une tâche de manipulateur, en particulier d'une pose à atteindre (TCP Z) ou voie à parcourir, et un moyen de déplacement pour la commande automatique du manipulateur par rapport à un contour de perturbation virtuel prédéfini par le moyen de prescription de contour de perturbation, dans lequel la commande est aménagée pour la réalisation d'un procédé selon l'une quelconque des revendications précédentes.

12. Produit de programme informatique avec un code de programme enregistré sur un support lisible par machine, qui exécute le procédé selon l'une quelconque des revendications précédentes 1 à 10, lorsqu'il se déroule dans une commande selon la revendication 11.

# Fig. 1

# Fig. 2

EP 2 409 816 B2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007093413 A1
- US 2001005120 A1
- WO 2006091494 A1
- US 2010137882 A1